# EUROPÄISCHE PATENTANMELDUNG

(11) **EP 3 582 051 A1**
(43) Veröffentlichungstag der Anmeldung: **18.12.2019**
(21) Anmeldenummer: 18177172.6
(22) Anmeldetag: 12.06.2018
(51) Int. Cl.: G05B 23/02

(54) **UMFASSENDE STÖRUNGSANALYSE VON STEUEREINRICHTUNGEN UND INDUSTRIELLEN TECHNISCHEN ANLAGEN**

(71) Anmelder: Siemens Aktiengesellschaft, 80333 München (DE)
(72) Erfinder: Hegmann, Michael, 91126 Schwabach (DE)

(57) **Zusammenfassung**

Eine Steuereinrichtung (2) einer industriellen technischen Anlage (1) nimmt in einem Normalbetrieb zyklisch von Sensoren (5) der Anlage (1) Istgrößen (Z) entgegen, ermittelt unter Verwertung der Istgrößen (Z) und von Sollgrößen (Z*) Steuergrößen (C) für Aktoren (6) der Anlage (1) und gibt die Steuergrößen (C) an die Aktoren (6) aus. Die Steuereinrichtung (2) speichert im Normalbetrieb zumindest für einen begrenzten Zeitraum eine Historie zumindest eines Teils der Istgrößen (Z). Sie überwacht im Normalbetrieb die Istgrößen (Z) auf Auftreten einer Störung. Beim Auftreten einer Störung übermittelt die Steuereinrichtung (2) eine die Störung identifizierende Störungsmeldung (M) und zumindest für einen Teil der Istgrößen (Z), deren Historie die Steuereinrichtung (2) speichert, die Historie an eine automatisiert betriebene Wissensbasis (7). Sie nimmt in Reaktion auf die Übermittlung der Störungsmeldung (M) und der Historie zumindest eines Teils der Istgrößen (Z) von der Wissensbasis (7) eine Antwort (A) entgegen und gibt die Antwort (A) über eine Anzeigeeinrichtung (10) an eine Bedienperson (11) der Steuereinrichtung (2) aus.

## Beschreibung

Die vorliegende Erfindung geht aus von einem Betriebsverfahren für eine Steuereinrichtung zur Steuerung einer industriellen technischen Anlage,
- wobei die Steuereinrichtung in einem Normalbetrieb zyklisch von Sensoren der Anlage Istgrößen der Anlage entgegennimmt, unter Verwertung der Istgrößen der Anlage und von Sollgrößen der Anlage Steuergrößen für Aktoren der Anlage ermittelt und die Steuergrößen an die Aktoren ausgibt,
- wobei die Steuereinrichtung im Normalbetrieb zumindest für einen begrenzten Zeitraum eine Historie zumindest eines Teils der Istgrößen speichert,
- wobei die Steuereinrichtung im Normalbetrieb die Istgrößen auf Auftreten einer Störung überwacht.

Die vorliegende Erfindung geht weiterhin aus von einem Computerprogramm, das Maschinencode umfasst, der von einer Steuereinrichtung für eine industrielle technische Anlage abarbeitbar ist, wobei die Abarbeitung des Maschinencodes durch die Steuereinrichtung bewirkt, dass die Steuereinrichtung ein derartiges Betriebsverfahren ausführt.

Die vorliegende Erfindung geht weiterhin aus von einer Steuereinrichtung für eine industrielle technische Anlage, wobei die Steuereinrichtung mit einem derartigen Computerprogramm programmiert ist, so dass die Steuereinrichtung ein derartiges Betriebsverfahren ausführt.

Während des kompletten Lebenszyklus von industriellen technischen Anlagen - angefangen von kleinen Anlagen wie beispielsweise einem elektrischen Antrieb bis zu Großanlagen wie beispielsweise einer Chemieanlage oder einer Anlage der Grundstoffindustrie oder eine Anlage zur Herstellung von Papier oder Zement - können Störungen auftreten. Derartige Störungen können - je nach Störung - mit Einschränkungen im Betrieb der industriellen technischen Anlage oder einem Stillstand der industriellen technischen Anlage verbunden sein. Man ist daher bestrebt, derartige Störungen nach ihrem Auftreten möglichst schnell und möglichst vollständig zu beheben. Zu diesem Zweck ist es in der Regel erforderlich, die Störung so genau wie möglich zu beschreiben. Je genauer die Beschreibung der Störung, desto präziser können die Maßnahmen zur Behebung der Störung bestimmt werden.

Im Stand der Technik werden dem Betreiber der industriellen technischen Anlage in der Regel über eine Anzeigeeinrichtung generisch formulierte Störungsmeldungen mit einem entsprechenden Störungscode, gegebenenfalls ergänzt mit Begleitwerten angezeigt. Diese Meldungen vermitteln dem Betreiber der industriellen technischen Anlage, je nach Lage des Einzelfalls, keine, eine oder mehrere Möglichkeiten zur Behebung der Störung.

Es ist weiterhin bekannt, im Falle einer Störung zusätzlich auch noch Messwerte einiger weniger wichtiger Signale aufzuzeichnen, die unmittelbar vor dem Auftreten der Störung angefallen sind. Manchmal ist es auch möglich, eine Historie derartiger Signale aufzuzeichnen. Die Störungen und die Signale können sodann einer Bedienperson für die industrielle technische Anlage über eine Anzeigeeinrichtung angezeigt werden.

Allen Maßnahmen des Standes der Technik ist gemeinsam, dass nur eine Anzeige der Störung erfolgt, jedoch keine über die Anzeige der Störung als solche hinausgehende Maßnahmen zur Behebung der Störung vorgeschlagen werden.

Die Aufgabe der vorliegenden Erfindung besteht darin, verbesserte Möglichkeiten zu schaffen, mittels derer dem Betreiber der industriellen technischen Anlage zusätzlich zur Störungsmeldung als solcher auch Hinweise zur Behebung der Störung gegeben werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren der eingangs genannten Art dadurch ausgestaltet,
- dass die Steuereinrichtung beim Auftreten einer Störung eine die Störung identifizierende Störungsmeldung und zumindest für einen Teil der Istgrößen, deren Historie die Steuereinrichtung speichert, die Historie an eine automatisiert betriebene Wissensbasis übermittelt,
- dass die Steuereinrichtung in Reaktion auf die Übermittlung der Störungsmeldung und der Historie zumindest eines Teils der Istgrößen von der Wissensbasis eine Antwort entgegennimmt und
- dass die Steuereinrichtung die Antwort über eine Anzeigeeinrichtung an eine Bedienperson der Steuereinrichtung ausgibt.

Durch diese Vorgehensweise ist es möglich, der Bedienperson der Steuereinrichtung mittels der Antwort gezielte Hinweise zur Behebung der Störung zu geben.

In einer bevorzugten Ausgestaltung des Betriebsverfahrens ist vorgesehen,
- dass die Steuereinrichtung im Normalbetrieb für den begrenzten Zeitraum zusätzlich zur Historie zumindest eines Teils der Istgrößen auch eine Historie zumindest eines Teils der Sollgrößen und/oder eine Historie zumindest eines Teils der Steuergrößen speichert und
- dass die Steuereinrichtung beim Auftreten der Störung zusätzlich zur Störungsmeldung und zur Historie zumindest eines Teils der Istgrößen auch zumindest für einen Teil der Sollgrößen und/oder Steuergrößen, deren Historie die Steuereinrichtung speichert, die Historie an die Wissensbasis übermittelt.

Dadurch werden der Wissensbasis mehr Informationen zur Verfügung gestellt, so dass die Wissensbasis ihre Antwort präziser auf die aufgetretene Störung "maßschneidern" kann.

Vorzugsweise bestimmt die Steuereinrichtung in Abhängigkeit von der aufgetretenen Störung, welche Historien sie an die Wissensbasis übermittelt. Dadurch ist es möglich, die an die Wissensbasis übermittelten Informationen auf das Wesentliche zu reduzieren.

Vorzugsweise nimmt die Steuereinrichtung vor der Ausführung des Normalbetriebs von der Bedienperson Vorgaben entgegen und bestimmt in Abhängigkeit von den Vorgaben, welche Historien sie ermittelt und/oder welche Historien sie beim Auftreten einer Störung an die Wissensbasis übermittelt. Dadurch kann auf einfache und effiziente Weise durch die Bedienperson festgelegt werden, welche Informationen erfasst werden und welche Informationen im Falle einer Störung an die Wissensbasis übermittelt werden.

Vorzugsweise übermittelt die Steuereinrichtung beim Auftreten einer Störung zusätzlich zur Störungsmeldung und den übermittelten Historien weitere Informationen an die Wissensbasis. Dadurch ist ein noch weiter verbessertes "Maßschneidern" der Antwort durch die Wissensbasis möglich.

Die weiteren Informationen können insbesondere mindestens einen der nachfolgenden Sachverhalte umfassen:
- Identifizierungsdaten zur eindeutigen Identifizierung der Steuereinrichtung und/oder der Anlage,
- Informationen über die Hardware der Steuereinrichtung und/oder der Anlage,
- Informationen über die Firmware der Steuereinrichtung und/oder der Anlage,
- Informationen über die Software der Steuereinrichtung,
- Kommunikationseinstellungen der Steuereinrichtung,
- Einstellungen von Steuerungsparametern der Steuereinrichtung,
- Informationen über den Zustand der Umgebung der Steuereinrichtung und/oder der Anlage,
- Informationen über an Elementen der Anlage aufgetretenen Verschleiß,
- eine Konfiguration der Anlage.

Vorzugsweise nimmt die Steuereinrichtung in Reaktion auf die über die Anzeigeeinrichtung an die Bedienperson ausgegebene Antwort von der Bedienperson Ergänzungsinformationen entgegen und leitet die Ergänzungsinformationen an die Wissensbasis weiter. Dadurch kann die Wissensbasis ihr zukünftiges Verhalten optimieren.

Die Optimierung des zukünftigen Verhaltens der Wissensbasis ist besonders effizient, wenn die Ergänzungsinformationen eine Auswahl einer von mehreren in der Antwort enthaltenen Teilantworten, eine Bewertung der Antwort und/oder Freitext enthalten. Die Auswahl einer Teilantwort kann beispielsweise bedeuten, dass die Antwort mehrere mögliche Maßnahmen zur Behebung der Störung enthalten hat und die Bedienperson markiert, welche Maßnahmen sie ergriffen hat oder welche Maßnahme tatsächlich zum Erfolg geführt hat. Die Bewertung der Antwort kann beispielsweise eine Bewertung auf einer Skala von 0 oder 1 ("sehr schlecht") bis 5 oder 10 ("ausgezeichnet") sein.

Die Steuereinrichtung kann beim Auftreten einer Störung den Normalbetrieb, in dem sie zyklisch von den Sensoren der Anlage die Istgrößen der Anlage entgegennimmt, unter Verwertung der Istgrößen der Anlage und der Sollgrößen der Anlage die Steuergrößen für die Aktoren der Anlage ermittelt und die Steuergrößen an die Aktoren ausgibt, entweder trotz der Störung beibehalten oder aufgrund der Störung beenden. Welche dieser beiden Maßnahmen ergriffen wird, kann von der Störung abhängig sein.

Die Wissensbasis kann innerhalb der Steuereinrichtung gespeichert sein. Alternativ kann die Wissensbasis in einem von der Steuereinrichtung verschiedenen Rechner gespeichert sein. In diesem Fall ist der Rechner über ein Rechnernetz mit der Steuereinrichtung verbunden.

In einer besonders fortschrittlichen Ausgestaltung des Betriebsverfahrens ist es möglich, dass die Steuereinrichtung anhand der Antwort selbsttätig Maßnahmen zum Beheben der Störung ermittelt. Insbesondere kann die Antwort mehrere mögliche Maßnahmen zum Beheben der Störung und zusätzlich Bedingungen enthalten, unter welchen Umständen welche Maßnahme im Sinne eines Beheben der Störung zielführend sind. In diesem Fall kann die Steuereinrichtung beispielsweise weitere erfasste, aber nicht an die Wissensbasis übermittelte Historien auswerten und je nach Auswertung die eine oder die andere vorgeschlagene Maßnahme ermitteln.

Im Falle des eigenständigen Ermittelns von Maßnahmen zum Beheben der Störung ist es möglich, dass die Steuereinrichtung die ermittelten Maßnahmen direkt ausführt. Je nach Lage des Einzelfalls - beispielsweise der Art der Störung und/oder der Art der ermittelten Maßnahme - kann dies alternativ mit oder ohne vorherige Bestätigung der Maßnahme durch die Bedienperson erfolgen.

Die Aufgabe wird weiterhin durch ein Computerprogramm mit den Merkmalen des Anspruchs 13 gelöst. Erfindungsgemäß bewirkt die Abarbeitung des Maschinencodes durch die Steuereinrichtung, dass die Steuereinrichtung ein erfindungsgemäßes Betriebsverfahren ausführt.

Die Aufgabe wird weiterhin durch eine Steuereinrichtung mit den Merkmalen des Anspruchs 14 gelöst. Erfindungsgemäß ist die Steuereinrichtung mit einem erfindungsgemäßen Computerprogramm programmiert, so dass die Abarbeitung des Maschinencodes durch die Steuereinrichtung bewirkt, dass die Steuereinrichtung ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine vernetzte industrielle technische Anlage,
- FIG 2: ein Ablaufdiagramm,
- FIG 3: eine mögliche Antwort und
- FIG 4 bis 9: Ablaufdiagramme.

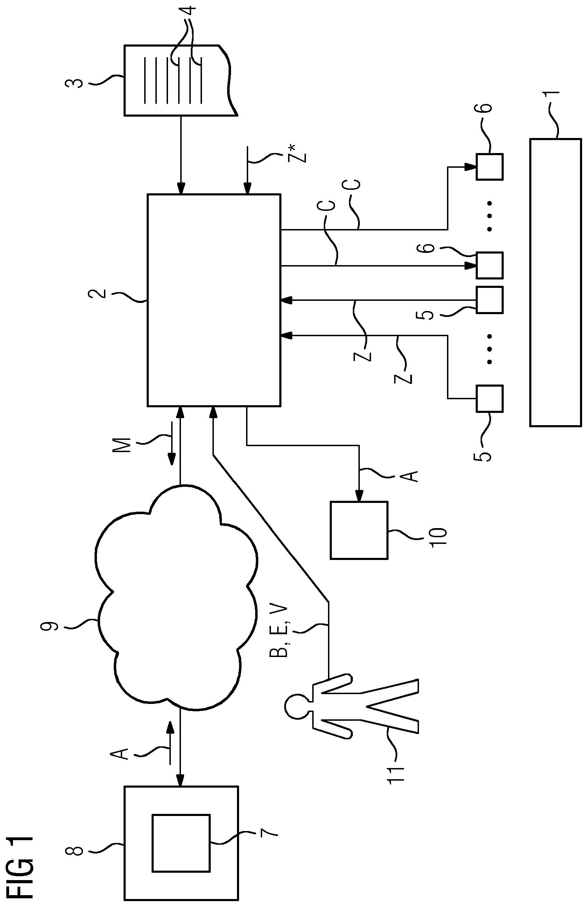

Gemäß FIG 1 wird eine industrielle technische Anlage 1 von einer Steuereinrichtung 2 gesteuert. Bei der industriellen technischen Anlage 1 kann es sich um eine größere Anlage handeln, beispielsweise eine Anlage der Papierindustrie, der Chemieindustrie oder der Grundstoffindustrie, insbesondere ein Walzwerk. Alternativ kann es sich bei der industriellen technischen Anlage 1 um eine mittlere Anlage handeln, beispielsweise eine Werkzeugmaschine oder eine Spritzgießmaschine. Wiederum alternativ kann es sich bei der industriellen technischen Anlage 1 um eine kleinere Anlage handeln, beispielsweise einen einzelnen Antrieb einer größeren Maschine oder Anlage.

Die Steuereinrichtung 2 ist in aller Regel eine softwareprogrammierbare Steuereinrichtung. Sie ist daher mit einem Computerprogramm 3 programmiert. Das Computerprogramm 3 umfasst Maschinencode 4, der von der Steuereinrichtung 2 abarbeitbar ist. Die Abarbeitung des Maschinencodes 4 durch die Steuereinrichtung 2 bewirkt, dass die Steuereinrichtung 2 ein Betriebsverfahren ausführt, das nachstehend in Verbindung mit den weiteren FIG näher erläutert wird.

Zur Steuerung der Anlage 1 nimmt die Steuereinrichtung 2 im Rahmen des Betriebsverfahrens in einem Normalbetrieb in einem Schritt S1 von Sensoren 5 der Anlage 1 (im Falle eines Antriebs beispielsweise von einem Lagesensor) Istgrößen Z entgegen. Rein beispielhaft wird nachfolgend angenommen, dass insgesamt 10 Istgrößen Z erfasst werden. Es ist selbstverständlich aber auch eine Erfassung einer anderen Anzahl von Istgrößen Z möglich. Die Istgrößen Z werden nachfolgend mit Z0 bis Z9 bezeichnet, sofern zwischen verschiedenen Istgrößen Z unterschieden werden soll. Wenn hingegen auf die Istgrößen Z allgemein Bezug genommen wird, wird nur das Bezugszeichen Z verwendet.

In einem Schritt S2 speichert die Steuereinrichtung 2 zumindest für einen begrenzten Zeitraum eine Historie zumindest eines Teils der Istgrößen Z. Beispielsweise können für die Istgrößen Z1, Z2, Z7 und Z8 die Historien gespeichert werden, während dies bei den Istgrößen Z0, Z3 bis Z6 und Z9 nicht erfolgt. Im Ergebnis füllt die Steuereinrichtung 2 somit für jede Istgröße Z, deren Historie sie speichert, nach und nach einen Pufferspeicher, in dem n zeitlich aufeinanderfolgende Werte der jeweiligen Istgröße Z abgespeichert werden. Wenn der Pufferspeicher voll ist, wird der jeweils älteste Wert der jeweiligen Istgröße Z verdrängt. Die Anzahl n an Werten definiert in Verbindung mit einer Zykluszeit, mit die Schritte S1 und S2 sowie weitere Schritte S3 bis S5 wiederholt werden, den begrenzten Zeitraum.

Im Schritt S3 überwacht die Steuereinrichtung 3 die Istgrößen Z auf Auftreten einer Störung. Beispielsweise kann die Steuereinrichtung 3 zu diesem Zweck eine oder mehrere der erfassten Istgrößen Z oder aus den Istgrößen Z abgeleitete Größen mit Grenzwerten vergleichen und je nach Überschreiten oder Unterschreiten des jeweiligen Grenzwerts auf Störung oder keine Störung erkennen.

Wenn die Steuereinrichtung 2 im Schritt S3 keine Störung erkennt, geht die Steuereinrichtung 2 zum Schritt S4 über. Im Schritt S4 ermittelt die Steuereinrichtung 2 Steuergrößen C für Aktoren 6 der Anlage 1 (im Falle eines Antriebs beispielsweise einen Sollstrom oder Ansteuerzustände für einen Stromrichter). Im Rahmen der Ermittlung der Steuergrößen C verwertet die Steuereinrichtung 2 zumindest die Istgrößen Z der Anlage 1 und korrespondierende Sollgrößen Z*. In manchen Fällen verwertet die Steuereinrichtung 2 zusätzlich interne variable Größen (beispielsweise Zustände von Timern und Merkern) und/oder interne, im Normalbetrieb konstante Parameter (beispielsweise die Einstellungen von Reglern). Rein beispielhaft wird nachfolgend angenommen, dass insgesamt 10 Sollgrößen Z* vorgegeben werden. Es ist selbstverständlich aber auch eine andere Anzahl von Sollgrößen Z* möglich. Die Sollgrößen Z* werden nachfolgend mit Z0* bis Z9* bezeichnet, sofern zwischen verschiedenen Sollgrößen Z* unterschieden werden soll. Wenn hingegen auf die Sollgrößen Z* allgemein Bezug genommen wird, wird nur das Bezugszeichen Z* verwendet. Analoge Ausführungen gelten für die Steuergrößen C.

Im Schritt S5 gibt die Steuereinrichtung 2 die ermittelten Steuergrößen C an die Aktoren 6 aus. Sodann geht die Steuereinrichtung 2 zum Schritt S1 zurück.

Die Steuereinrichtung 2 führt somit die Schritte S1 bis S5 zyklisch aus, solange keine Störung vorliegt. Die Zykluszeit, mit der die Abfolge der Schritte S1 bis S5 wiederholt wird, liegt in der Regel im niedrigen Millisekundenbereich, in manchen Fällen auch darunter. In manchen Fällen - insbesondere bei Antrieben - ist sogar eine Zykluszeit von unter 100 µs möglich.

Wenn die Steuereinrichtung 2 im Schritt S3 hingegen eine Störung erkennt, geht die Steuereinrichtung 2 zu einem Schritt S6 über. Im Schritt S6 ermittelt die Steuereinrichtung 2, welche Störung aufgetreten ist, und selektiert eine diese Störung identifizierende Störungsmeldung M. Weiterhin ordnet sie der Störungsmeldung M im Schritt S6 zumindest für einen Teil der Istgrößen Z, deren Historie sie speichert, deren jeweilige Historie zu. Wenn entsprechend obigen Beispiel die Historien für die Istgrößen Z1, Z2, Z7 und Z8 erfasst werden, kann die Steuereinrichtung 2 der Störungsmeldung M beispielsweise die Historien für die Istgrößen Z1 und Z7 zuordnen, während sie der Störungsmeldung M die Historien für die Istgrößen Z2 und Z8 nicht zuordnet.

In einem Schritt S7 übermittelt die Steuereinrichtung 2 sodann die Störungsmeldung M und die der Störungsmeldung M zugeordneten Historien an eine automatisiert betriebene Wissensbasis 7. Es ist möglich, dass die Wissensbasis 7 innerhalb der Steuereinrichtung 2 selbst gespeichert ist. In der Regel ist die Wissensbasis 7 jedoch entsprechend der Darstellung in FIG 1 in einem Rechner 8 gespeichert. Der Rechner 8 ist in diesem Fall eine von der Steuereinrichtung 2 verschiedene Einrichtung. Er ist mit der Steuereinrichtung 2 über ein Rechnernetz 9 - beispielsweise das Internet oder ein LAN - verbunden. Der Rechner 8 kann beispielsweise Cloud-basiert sein.

In der Wissensbasis 7 erfolgt eine automatisierte Analyse und Auswertung der aufgetretenen Störung. Die Wissensbasis 7 wertet zu diesem Zweck insbesondere die Historien der übermittelten Istgrößen Z aus. Beispielsweise können die übermittelten Historien in Verbindung mit der Störungsmeldung M oder ohne Verbindung zu ihr gespeichert, miteinander verknüpft und auch analysiert werden. Weiterhin können auch vergleichbare Sachverhalte ausgewertet werden, die bei vergleichbaren Steuereinrichtungen 2 und/oder vergleichbaren Anlagen 1 aufgetreten sind.

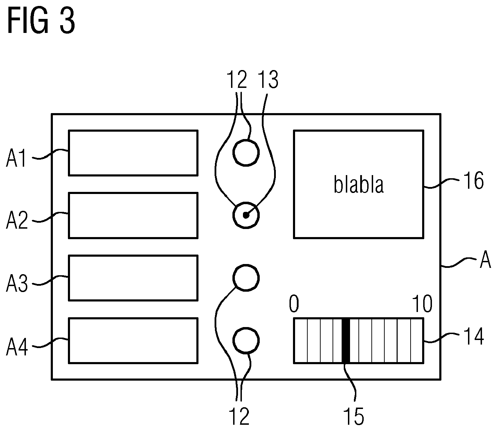

Sodann übermittelt die Wissensbasis 7 in Reaktion auf die übermittelte Störungsmeldung M eine entsprechende Antwort A an die Steuereinrichtung 2. Diese nimmt die Antwort A in einem Schritt S8 entgegen. In einem Schritt S9 gibt die Steuereinrichtung 2 die Antwort A über eine Anzeigeeinrichtung 10 (siehe FIG 1) an eine Bedienperson 11 (siehe ebenfalls FIG 1) der Steuereinrichtung 2 aus. Die Antwort A kann nach Bedarf ausgestaltet sein. Beispielsweise kann die Antwort A entsprechend der Darstellung in FIG 3 eine oder mehrere Teilantworten A1 bis A4 umfassen.

In einem Schritt S10 prüft die Steuereinrichtung 2, die aufgetretene und gemeldete Störung kritischer Natur ist. Wenn dies nicht der Fall ist, geht die Steuereinrichtung 2 zum Schritt S4 über. In diesem Fall setzt die Steuereinrichtung die Ausführung der Schritte S1 bis S5 also fort. Sie behält damit trotz der Störung den Normalbetrieb bei. Wenn die Steuereinrichtung 2 im Schritt S10 hingegen eine kritische Störung erkennt, geht sie zu einem Schritt S11 über. Im Schritt S11 beendet die Steuereinrichtung 2 den Normalbetrieb. Sie nimmt den Normalbetrieb erst wieder auf, wenn die Bedienperson 11 der Steuereinrichtung 2 in einem Schritt S12 einen Befehl zur Wiederaufnahme des Normalbetriebs vorgibt.

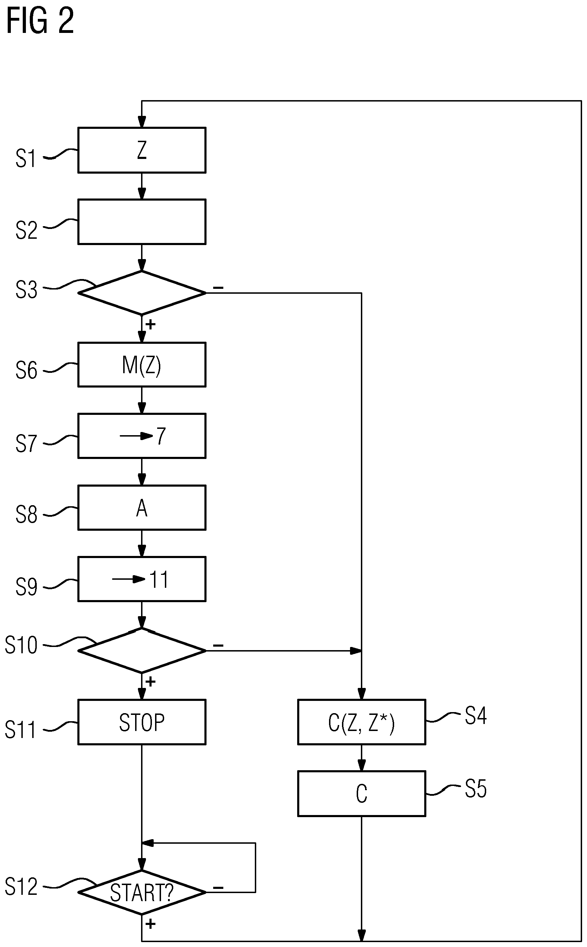

Genau genommen ist die Darstellung gemäß FIG 2 nicht völlig korrekt. Denn genau genommen folgt der Schritt S10 unmittelbar auf den Schritt S3. Die Schritte S6 bis S9 werden hingegen im Falle einer Störung entweder parallel zu den Schritten S1 bis S5 ausgeführt oder sind dem Schritt S11 nachgeordnet. Die Darstellung gemäß FIG 2 führt jedoch zu einer verständlicheren Darstellung.

Die erfindungsgemäße Vorgehensweise kann auf verschiedene Art und Weise modifiziert werden.

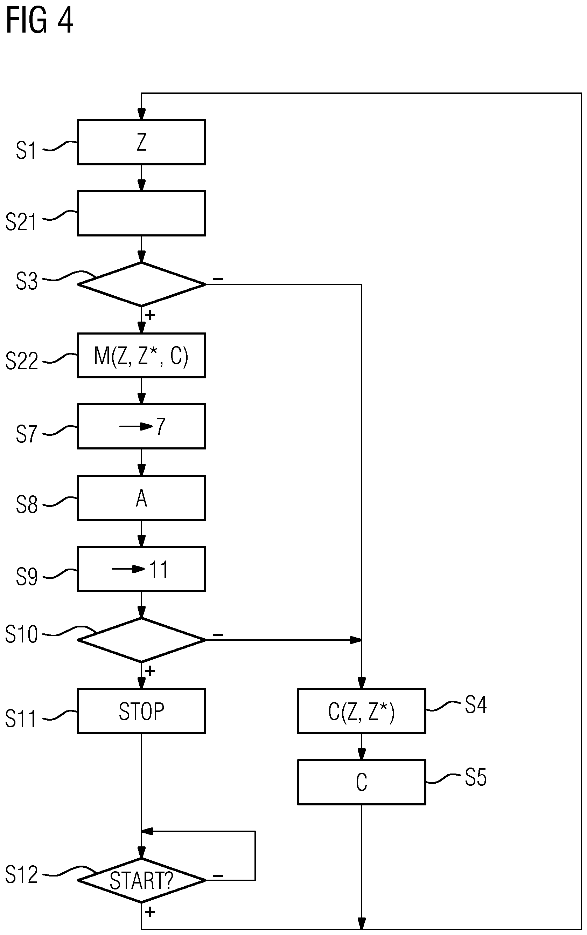

So ist es beispielsweise entsprechend der Darstellung in FIG 4 möglich, dass der Schritt S2 durch einen Schritt S21 und der Schritt S6 durch einen Schritt S22 ersetzt sind.

In diesem Fall kann die Steuereinrichtung 2 im Schritt S21 für den begrenzten Zeitraum zusätzlich auch für zumindest einen Teil der Sollgrößen Z* und/oder einen Teil der Steuergrößen C eine entsprechende Historie abspeichern. Beispielsweise kann die Steuereinrichtung im Schritt S21 zusätzlich für die Sollgrößen Z0*, Z1* und Z8* und/oder die Steuergrößen C3, C5 und C7 jeweils deren Historie speichern. Hiermit korrespondierend kann die Steuereinrichtung 2 der Störungsmeldung M im Schritt S22 nicht nur für zumindest einen Teil der Istgrößen Z, sondern auch für zumindest einen Teil der Sollgrößen Z* und/oder zumindest einen Teil der Steuergrößen C eine jeweils erfasste Historie zuordnen. Wenn entsprechend obigen Beispiel - zusätzlich zu den Historien für die Istgrößen Z - auch für die Sollgrößen Z0*, Z1* und Z8* und/oder die Steuergrößen C3, C5 und C7 jeweils deren Historie gespeichert wird, kann die Steuereinrichtung 2 der Störungsmeldung M im Schritt S22 beispielsweise - zusätzlich zu den Historien für die Istgrößen Z1 und Z7 - die Historie für die Sollgrößen Z0* und Z8* und/oder die Historie für die Steuergröße C3 zuordnen. In jedem Fall werden zusammen mit der Störungsmeldung M die zugeordneten Historien mit an die Wissensbasis 7 übermittelt. Dies gilt unabhängig davon, ob es sich um Historien für Istgrößen Z, Sollgrößen Z* oder Steuergrößen C handelt.

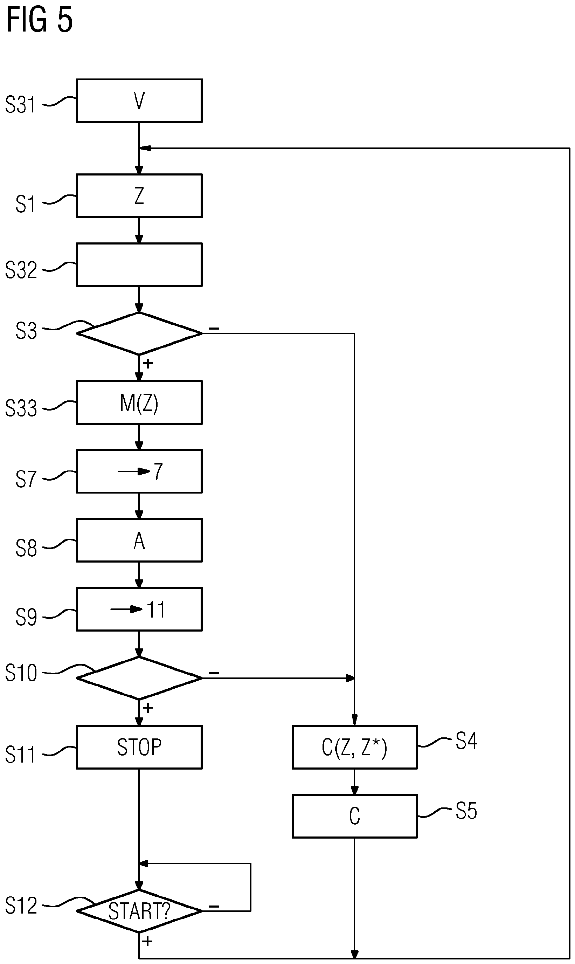

Ebenso ist es beispielsweise entsprechend der Darstellung in FIG 5 möglich, dass ein zusätzlicher Schritt S31 vorhanden sind und zusätzlich die Schritte S2 und S6 durch Schritte S32 und S33 ersetzt sind. In diesem Fall kann die Steuereinrichtung im Schritt S31 von der Bedienperson 11 Vorgaben V entgegennehmen. Die Vorgaben V können beispielsweise festlegen, welche Historien im Schritt S32 gespeichert werden. Alternativ oder zusätzlich können die Vorgaben V festlegen, welche Historien der Störungsmeldung M im Falle einer Störung im Schritt S33 zugeordnet werden. Die Steuereinrichtung 2 bestimmt also in diesem Fall in Abhängigkeit von den Vorgaben V, welche Historien sie ermittelt und/oder welche Historien sie beim Auftreten einer Störung an die Wissensbasis 7 übermittelt. Die Vorgehensweise von FIG 5 ist nach Bedarf mit der Vorgehensweise von FIG 4 kombinierbar oder unabhängig von ihr realisierbar.

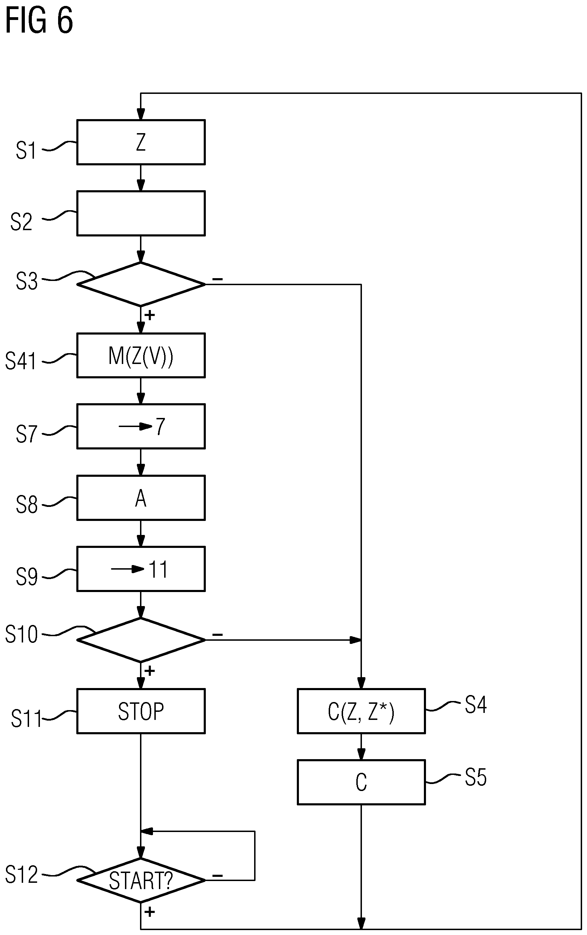

Weiterhin ist es entsprechend der Darstellung in FIG 6 möglich, dass der Schritt S6 durch einen Schritt S41 ersetzt ist. In diesem Fall bestimmt die Steuereinrichtung 2 in Abhängigkeit von der aufgetretenen Störung, welche Historien sie an die Wissensbasis 7 übermittelt. Die Vorgehensweise von FIG 6 ist nach Bedarf mit der Vorgehensweise von FIG 4 und/ oder von FIG 5 kombinierbar oder unabhängig von ihnen realisierbar.

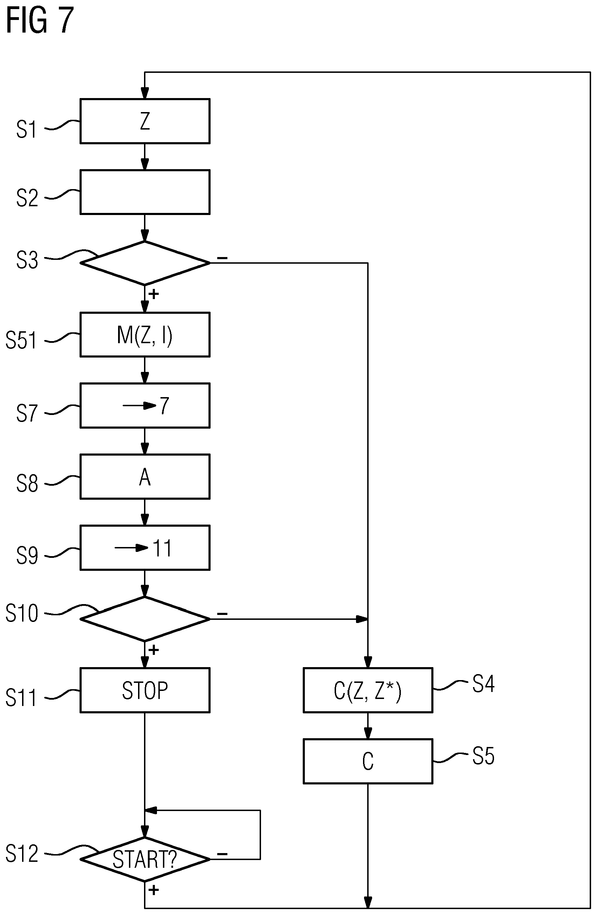

Weiterhin ist es entsprechend der Darstellung in FIG 7 möglich, dass der Schritt S6 durch einen Schritt S51 ersetzt ist. In diesem Fall ordnet die Steuereinrichtung 2 der Störungsmeldung M weitere Informationen I zu. Auch die Informationen I werden zusammen mit der Störungsmeldung M als solcher im Schritt S7 an die Wissensbasis 7 übermittelt. Die Vorgehensweise von FIG 7 ist ebenfalls nach Bedarf mit der Vorgehensweise einer oder mehrerer der FIG 4 bis 6 kombinierbar oder unabhängig von ihnen realisierbar.

Die zusätzlichen Informationen I können nach Bedarf bestimmt sein. Beispielsweise kann es sich bei den zusätzlichen Informationen I um mindestens eine der folgenden Angaben handeln:
- Identifizierungsdaten zur eindeutigen Identifizierung der Steuereinrichtung 2 und/oder der Anlage 1. Hierbei kann je nach Bedarf eine Identifizierung des jeweiligen Typs (beispielsweise "Antrieb vom Typ XYZ") oder eine Identifizierung der individuellen Steuereinrichtung 2 bzw. der individuellen Anlage 1 (beispielsweise "Antrieb 4 der Maschine XY, die am 04. Dezember 2015 an die Firma Müller geliefert wurde") erfolgen.
- Informationen über die Hardware der Steuereinrichtung 2 und/oder der Anlage 1. Die Angaben können beispielsweise Bestellnummern, Versionsnummern usw. umfassen.
- Informationen über die Firmware der Steuereinrichtung 2 und/oder der Anlage 1. Beispielsweise können Informationen darüber geliefert werden, welche Firmware-Module überhaupt installiert sind oder genutzt werden sowie welche Version bestimmter Firmware-Module oder der Firmware insgesamt genutzt wird.
- Informationen über die Software der Steuereinrichtung 2. Auch hier können - analog zur Information über die Firmware der Steuereinrichtung 2 - Informationen darüber geliefert werden, welche Software-Module überhaupt installiert sind oder genutzt werden sowie welche Version bestimmter Software-Module oder der Software insgesamt genutzt wird.
- Kommunikationseinstellungen der Steuereinrichtung 2, beispielsweise deren Vernetzung mit anderen Steuereinrichtungen und/oder übergeordneten Rechnern und dergleichen mehr.
- Einstellungen von Steuerungsparametern der Steuereinrichtung 2, beispielsweise Parametrierungen von Reglern.
- Informationen über den Zustand der Umgebung der Steuereinrichtung 2 und/oder der Anlage 1, beispielsweise Temperatur und/oder Luftfeuchtigkeit.
- Informationen über an Elementen der Anlage 1 aufgetretenen Verschleiß. Dies kann - rein beispielhaft - bei einem elektrischen Antrieb mit Kohlebürsten der aufgelaufene Verschleiß der Kohlebürsten sein, bei einem elektromechanischen Schalter (Schütz) oder einem elektronischen Schalter (IGBT, MOSFET) die Zahl der Schaltspiele.
- Eine Konfiguration der Anlage 1, beispielsweise an welcher Stelle einer größeren Maschine ein bestimmter Antrieb eingesetzt wird.

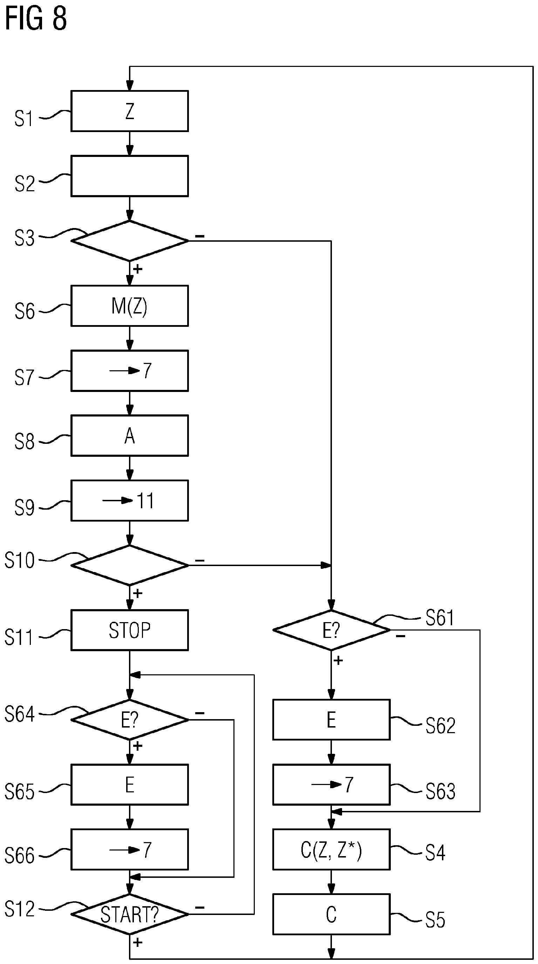

Weiterhin ist es entsprechend der Darstellung in FIG 8 möglich, dass zusätzliche Schritte S61 bis S66 vorhanden sind. Im Schritt S61 prüft die Steuereinrichtung 2, ob die Bedienperson 11 ihr Ergänzungsinformationen E vorgibt. Wenn dies der Fall ist, nimmt die Steuereinrichtung 2 die Ergänzungsinformationen E im Schritt S62 entgegen. Im Schritt S63 leitet die Steuereinrichtung 2 die Ergänzungsinformationen E an die Wissensbasis 7 weiter. Da die Steuereinrichtung 2 die Schritte S61 bis S63 im NEIN-Zweig des Schrittes S10 und damit nach den Schritten S8 und S9 ausführt, werden diese Schritte von der Steuereinrichtung 2 in Reaktion auf die Antwort A ausgeführt. Die Schritte S64 bis S66 korrespondieren mit den Schritten S61 bis S63. Sie werden jedoch im JA-Zweig des Schrittes S10 ausgeführt. Die Vorgehensweise von FIG 8 ist ebenfalls nach Bedarf mit der Vorgehensweise einer oder mehrerer der FIG 4 bis 7 kombinierbar oder unabhängig von ihnen realisierbar.

Genau genommen ist auch die Darstellung gemäß FIG 8 nicht völlig korrekt. Denn genau genommen werden Schritte S61 bis S63 - analog zu den Schritten S6 bis S9 - parallel zu den Schritten S1 bis S5 ausgeführt. Bei den Schritten S64 bis S66 ist es ebenfalls möglich, sie im Hintergrund auszuführen.

Die Ergänzungsinformationen E können beispielsweise, wie in der Darstellung in FIG 3 durch vier Kreise 12 angedeutet ist, von denen nur einer mit einem Punkt 13 gefüllt ist, eine Auswahl einer der Teilantworten A1 bis A4 enthalten. Alternativ oder zusätzlich können die Ergänzungsinformationen E beispielsweise, wie in der Darstellung in FIG 3 durch ein Bewertungsfeld 14 mit einer bewegbaren Markierung 15 angedeutet ist, eine Bewertung der Antwort A enthalten. Alternativ oder zusätzlich kann die Antwort A auch ein Textfeld 16 enthalten, in welches die Bedienperson 11 Freitext eintragen kann.

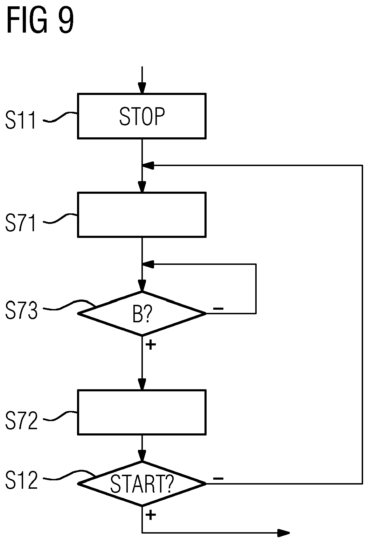

In denjenigen Fällen, in denen aufgrund der Störung der Normalbetrieb beendet wird, ist es entsprechend der Darstellung in FIG 9 weiterhin möglich, dass sich an den Schritt S11 Schritte S71 und S72 anschließen. Im Schritt S71 ermittelt die Steuereinrichtung 2 anhand der Antwort A selbsttätig Maßnahmen zum Beheben der Störung. Im Schritt S72 führt die Steuereinrichtung 2 die im Schritt S71 ermittelten Maßnahmen aus. Soweit erforderlich kann zusätzlich vor der Ausführung der ermittelten Maßnahmen in einem Schritt S73 von der Bedienperson 11 eine Bestätigung B abgefragt werden. Wenn dies der Fall ist, führt die Steuereinrichtung 2 den Schritt S72 erst nach Vorgabe der Bestätigung B aus. Die Vorgehensweise von FIG 9 ist ebenfalls nach Bedarf mit der Vorgehensweise einer oder mehrerer der FIG 4 bis 8 kombinierbar oder unabhängig von ihnen realisierbar.

Zusammengefasst betrifft die vorliegende Erfindung somit folgenden Sachverhalt:
Eine Steuereinrichtung 2 einer industriellen technischen Anlage 1 nimmt in einem Normalbetrieb zyklisch von Sensoren 5 der Anlage 1 Istgrößen Z entgegen, ermittelt unter Verwertung der Istgrößen Z und von Sollgrößen Z* Steuergrößen C für Aktoren 6 der Anlage 1 und gibt die Steuergrößen C an die Aktoren 6 aus. Die Steuereinrichtung 2 speichert im Normalbetrieb zumindest für einen begrenzten Zeitraum eine Historie zumindest eines Teils der Istgrößen Z. Sie überwacht im Normalbetrieb die Istgrößen Z auf Auftreten einer Störung. Beim Auftreten einer Störung übermittelt die Steuereinrichtung 2 eine die Störung identifizierende Störungsmeldung M und zumindest für einen Teil der Istgrößen Z, deren Historie die Steuereinrichtung 2 speichert, die Historie an eine automatisiert betriebene Wissensbasis 7. Sie nimmt in Reaktion auf die Übermittlung der Störungsmeldung M und der Historie zumindest eines Teils der Istgrößen Z von der Wissensbasis 7 eine Antwort A entgegen und gibt die Antwort A über eine Anzeigeeinrichtung 10 an eine Bedienperson 11 der Steuereinrichtung 2 aus.

Die vorliegende Erfindung weist viele Vorteile auf. Insbesondere können der Bedienperson 11 oftmals erheblich bessere Hinweise zur Behebung von Störungen gegeben werden als im Stand der Technik. Stillstandszeiten können dadurch reduziert werden. Weiterhin ist es möglich, geringer qualifiziertes Personal einzusetzen. Durch die Auswertung in einer zentralen Wissensbasis 7 kann weiterhin die Wissensbasis 7 nach und nach immer weiter erweitert werden. Gegebenenfalls kann es auch möglich sein, der Bedienperson 11 bereits im Vorfeld von Störungen Hinweise zu geben, mittels derer die Störung vermieden werden kann. Durch die Ergänzungsinformationen E kann eine noch weitergehende Optimierung der Wissensbasis 7 erfolgen. Durch die Analyse der gesammelten Daten können in der Wissensbasis 7 insbesondere auch systematische Fehler erkannt werden, die dann bei späteren Produktverbesserungen berücksichtigt werden können. Weiterhin ist es möglich, in der zentralen Wissensbasis 7 alle Störungen und deren Behebung zu protokollieren, so dass auf einfache Weise eine Historie der Steuereinrichtung 2 bzw. der Anlage 1 erstellt werden kann. Die Kommunikation zwischen der Steuereinrichtung 2 und dem Rechner 8 kann nach Bedarf anonym oder identifiziert sowie verschlüsselt oder unverschlüsselt erfolgen. Es ist auch möglich, dass eine Kommunikation in einer oder in beiden Richtungen nur nach einer vorherigen Authentifizierung und Autorisierung erfolgt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Steuereinrichtung (2) zur Steuerung einer industriellen technischen Anlage (1),
- wobei die Steuereinrichtung (2) in einem Normalbetrieb zyklisch von Sensoren (5) der Anlage (1) Istgrößen (Z) der Anlage (1) entgegennimmt, unter Verwertung der Istgrößen (Z) der Anlage (1) und von Sollgrößen (Z*) der Anlage (1) Steuergrößen (C) für Aktoren (6) der Anlage (1) ermittelt und die Steuergrößen (C) an die Aktoren (6) ausgibt,
- wobei die Steuereinrichtung (2) im Normalbetrieb zumindest für einen begrenzten Zeitraum eine Historie zumindest eines Teils der Istgrößen (Z) speichert,
- wobei die Steuereinrichtung (2) im Normalbetrieb die Istgrößen (Z) auf Auftreten einer Störung überwacht,
- wobei die Steuereinrichtung (2) beim Auftreten einer Störung eine die Störung identifizierende Störungsmeldung (M) und zumindest für einen Teil der Istgrößen (Z), deren Historie die Steuereinrichtung (2) speichert, die Historie an eine automatisiert betriebene Wissensbasis (7) übermittelt,
- wobei die Steuereinrichtung (2) in Reaktion auf die Übermittlung der Störungsmeldung (M) und der Historie zumindest eines Teils der Istgrößen (Z) von der Wissensbasis (7) eine Antwort (A) entgegennimmt und
- wobei die Steuereinrichtung (2) die Antwort (A) über eine Anzeigeeinrichtung (10) an eine Bedienperson (11) der Steuereinrichtung (2) ausgibt.

2. Betriebsverfahren nach Anspruch 1,
**dadurch gekennzeichnet,**
- **dass** die Steuereinrichtung (2) im Normalbetrieb für den begrenzten Zeitraum zusätzlich zur Historie zumindest eines Teils der Istgrößen (Z) auch eine Historie zumindest eines Teils der Sollgrößen (Z*) und/oder eine Historie zumindest eines Teils der Steuergrößen (C) speichert und
- **dass** die Steuereinrichtung (2) beim Auftreten der Störung zusätzlich zur Störungsmeldung (M) und zur Historie zumindest eines Teils der Istgrößen (Z) auch zumindest für einen Teil der Sollgrößen (Z*) und/oder Steuergrößen (C), deren Historie die Steuereinrichtung (2) speichert, die Historie an die Wissensbasis (7) übermittelt.

3. Betriebsverfahren nach Anspruch 1 oder 2,
**dadurch gekennzeichnet,**
**dass** die Steuereinrichtung (2) in Abhängigkeit von der aufgetretenen Störung bestimmt, welche Historien sie an die Wissensbasis (7) übermittelt.

4. Betriebsverfahren nach Anspruch 1, 2 oder 3,
**dadurch gekennzeichnet,**
**dass** die Steuereinrichtung (2) vor der Ausführung des Normalbetriebs von der Bedienperson (11) Vorgaben (V) entgegennimmt und dass die Steuereinrichtung (2) in Abhängigkeit von den Vorgaben (V) bestimmt, welche Historien sie ermittelt und/ oder welche Historien sie beim Auftreten einer Störung an die Wissensbasis (7) übermittelt.

5. Betriebsverfahren nach einem der obigen Ansprüche,
**dadurch gekennzeichnet,**
**dass** die Steuereinrichtung (2) beim Auftreten einer Störung zusätzlich zur Störungsmeldung (M) und den übermittelten Historien weitere Informationen (I) an die Wissensbasis (7) übermittelt.

6. Betriebsverfahren nach Anspruch 5,
**dadurch gekennzeichnet,**
**dass** die weiteren Informationen (I) mindestens einen der nachfolgenden Sachverhalte umfassen:
- Identifizierungsdaten zur eindeutigen Identifizierung der Steuereinrichtung (2) und/oder der Anlage (1),
- Informationen über die Hardware der Steuereinrichtung (2) und/oder der Anlage (1),
- Informationen über die Firmware der Steuereinrichtung (2) und/oder der Anlage (1),
- Informationen über die Software der Steuereinrichtung (2),
- Kommunikationseinstellungen der Steuereinrichtung (2),
- Einstellungen von Steuerungsparametern der Steuereinrichtung (2),
- Informationen über den Zustand der Umgebung der Steuereinrichtung (2) und/oder der Anlage (1),
- Informationen über an Elementen der Anlage (1) aufgetretenen Verschleiß,
- eine Konfiguration der Anlage (1).

7. Betriebsverfahren nach einem der obigen Ansprüche,
**dadurch gekennzeichnet,**
**dass** die Steuereinrichtung (2) in Reaktion auf die über die Anzeigeeinrichtung (10) an die Bedienperson (11) ausgegebene Antwort (A) von der Bedienperson (11) Ergänzungsinformationen (E) entgegennimmt und dass die Steuereinrichtung (2) die Ergänzungsinformationen (E) an die Wissensbasis (7) weiterleitet.

8. Betriebsverfahren nach Anspruch 7,
**dadurch gekennzeichnet,**
**dass** die Ergänzungsinformationen (E) eine Auswahl einer von mehreren in der Antwort (A) enthaltenen Teilantworten (A1 bis A4), eine Bewertung der Antwort (A) und/oder Freitext enthalten.

9. Betriebsverfahren nach einem der Ansprüche 1 bis 8,
**dadurch gekennzeichnet,**
**dass** die Steuereinrichtung (2) den Normalbetrieb, in dem sie zyklisch von den Sensoren (5) der Anlage (1) die Istgrößen (Z) der Anlage (1) entgegennimmt, unter Verwertung der Istgrößen (Z) der Anlage (1) und der Sollgrößen (Z*) der Anlage (1) die Steuergrößen (C) für die Aktoren (6) der Anlage (1) ermittelt und die Steuergrößen (C) an die Aktoren (6) ausgibt, entweder trotz der Störung beibehält oder aufgrund der Störung beendet.

10. Betriebsverfahren nach einem der obigen Ansprüche,
**dadurch gekennzeichnet,**
**dass** die Wissensbasis (7) innerhalb der Steuereinrichtung (2) gespeichert ist oder in einem von der Steuereinrichtung (2) verschiedenen Rechner (8) gespeichert ist, der über ein Rechnernetz (9) mit der Steuereinrichtung (2) verbunden ist.

11. Betriebsverfahren nach einem der obigen Ansprüche,
**dadurch gekennzeichnet,**
**dass** die Steuereinrichtung (2) anhand der Antwort (A) selbsttätig Maßnahmen zum Beheben der Störung ermittelt.

12. Betriebsverfahren nach Anspruch 11,
**dadurch gekennzeichnet,**
**dass** die Steuereinrichtung (2) die ermittelten Maßnahmen mit oder ohne vorherige Bestätigung durch die Bedienperson (11) ausführt.

13. Computerprogramm, das Maschinencode (4) umfasst, der von einer Steuereinrichtung (2) für eine industrielle technische Anlage (1) abarbeitbar ist, wobei die Abarbeitung des Maschinencodes (4) durch die Steuereinrichtung (2) bewirkt, dass die Steuereinrichtung (2) ein Betriebsverfahren nach einem der obigen Ansprüche ausführt.

14. Steuereinrichtung für eine industrielle technische Anlage (1), wobei die Steuereinrichtung mit einem Computerprogramm (3) nach Anspruch 13 programmiert ist, so dass die Steuereinrichtung ein Betriebsverfahren nach einem der obigen Ansprüche ausführt.
